# EUROPÄISCHE PATENTSCHRIFT

(11) **EP 1 842 272 B1**
(45) Veröffentlichungstag und Bekanntmachung des Hinweises auf die Patenterteilung: **20.03.2013**
(21) Anmeldenummer: 06707836.0
(22) Anmeldetag: 25.01.2006
(51) Int. Cl.: H02J 3/34, H02M 5/458

(54) **MITTELSPANNUNGSLANDANSCHLUSS FÜR SCHIFFE**
DISTRIBUTION VOLTAGE LAND CONNECTION FOR SHIPS
RACCORDEMENT TERRESTRE MOYENNE TENSION POUR BATEAUX

(30) Priorität: 27.01.2005 DE 102005004628
(43) Veröffentlichungstag der Anmeldung: 10.10.2007
(73) Patentinhaber: Siemens Aktiengesellschaft, 80333 München (DE)
(72) Erfinder: SCHMIDT, Hans-Erhard, 21406 Melbeck (DE); STEINKE, Manfred, 21147 Hamburg (DE); WIECK, Dieter, 21224 Rosengarten (DE)
(86) Internationale Anmeldenummer: PCT/EP2006/050434
(87) Internationale Veröffentlichungsnummer: WO 2006/079636

(56) Entgegenhaltungen:
- EP-A- 0 730 333
- WO-A-01/93410
- DE-A1- 3 300 703
- DE-A1- 4 018 748
- DE-B- 1 123 043
- US-B1- 6 329 725
- JANSSEN M ET AL: "Residual current compensation (RCC) for resonant grounded transmission systems using high performance voltage source inverter" 7. September 2003 (2003-09-07), 2003 IEEE PES TRANSMISSION AND DISTRIBUTION CONFERENCE. CONFERENCE PROCEEDINGS. DALLAS, TX, SEPT. 7 - 12, 2003, IEEE/PES TRANSMISSION AND DISTRIBUTION CONFERENCE AND EXPOSITION, NEW YORK, NY : IEEE, US, PAGE(S) 574-578 , XP010725503 ISBN: 0-7803-8110-6 Seite 576, linke Spalte; Abbildung 4

## Beschreibung

Die Erfindung betrifft eine Vorrichtung zum elektrischen Anschluss eines mehrphasigen Schiffsverteilungsnetzes an ein mehrphasiges Landversorgungsnetz.

Die Erfindung betrifft ferner ein Verfahren zum elektrischen Anschluss eines mehrphasigen Schiffsverteilungsnetzes an ein Landversorgungsnetz.

Eine solche Vorrichtung und ein solches Verfahren sind aus dem landläufigen Stand der Technik bereits bekannt. So ist beispielsweise bekannt geworden, die Wechselspannung eines Landversorgungsnetzes über einen zweckmäßigen dreiphasigen Transformator von etwa 34 KV auf 6,6 KV umzuspannen. Dabei ist dem Transformator eine Schaltanlage nachgeschaltet, deren Kabelabgang mit einem zweiten Transformator verbindbar ist, der die 6,6 KV Mittelspannung in den Niederspannungsbereich transformiert. Niederspannungsseitig ist der zweite Transformator mit einem Niederspannungssteckschrank verbunden, von dem aus die elektrische Leistung über eine Vielzahl von Schiffsverbindungskabeln auf das Schiff übertragen wird.

Die US 6,329,725 B1 beschreibt eine Verbindung eines Schiffsgenerators mit einem landseitig angeordneten Energieverteilungsnetz, um die von dem oder den Schiffsgeneratoren erzeugte Energie in das landseitig angeordnete Stromverteilungsnetz einspeisen zu können. Auf diese Weise werden unnötige Totzeiten der Schiffsgeneratoren vermieden.

In dem Beitrag von Janssen et al., "Residual Current Compensation (RCC) for resonant grounded transmission systems using high perfomance voltage source inverter" vom 07. Dezember 2003, erschienen IEEE 2003, Transmission and Distribution Conference auf Seite 574, ist ein so genannter Voltage Source Inverter beschrieben, wobei die dort gezeigte Vorrichtung zur Kopplung eines 50 Hz-Netzes mit einem 16,4 Hz-Netz vorgesehen ist. Hierbei kommen ein erster Umrichter mit Leistungshalbleiterschaltern sowie ein zweiter Umrichter zum Einsatz, die gleichspannungsseitig miteinander verbunden sind.

Der vorbekannten Vorrichtung haftet der Nachteil an, dass diese den Anschluss von nur solchen Schiffsverteilungsnetzen erlaubt, die eine mit dem Landversorgungsnetz übereinstimmende Frequenz, Phasenlage oder Sternpunktbehandlung aufweisen. In der Praxis ist eine solche Übereinstimmung jedoch nur selten gegeben. Ferner ist die Energieübertragung auf das Schiff über mehrere Kabelverbindungen gleichzeitig aufwändig, da zum Anschluss des Schiffverteilungsnetzes mehrere Steckverbindungen zusammengefügt werden müssen. Dies ist zeitaufwändig und insbesondere bei schlechten Wetterverhältnissen bedingungsunfreundlich.

Der Anschluss eines Schiffverteilungsnetzes an ein Energieversorgungsnetz an Land hat in der letzten Zeit erheblich an Bedeutung gewonnen. So wurde bislang das Schiffsverteilungsnetz von einem im Hafen liegenden Schiff durch Betreiben von Hilfsmotoren des Schiffes gespeist. Die Hilfsmotoren sind mit Generatoren gekoppelt, wodurch die erforderliche elektrische Energie erzeugt wird. Durch die Abgase und den Lärm der Hilfsmotoren kommt es jedoch zu einer massiven Belastung der Umwelt. Dies wird insbesondere in dicht bevölkerten Hafenstädten als störend empfunden. Darüber hinaus weisen die üblicherweise als Dieselmotoren ausgebildeten Hilfsmotoren einen hohen Kraftstoffverbrauch auf, so dass diese Art der Energieerzeugung auch kostenintensiv ist.

Aufgabe der Erfindung ist es daher, eine Vorrichtung und ein Verfahren der eingangs genannten Art bereitzustellen, mit denen eine kostengünstige und flexible Stromversorgung von Schiffen ermöglicht ist.

Die Erfindung löst diese Aufgabe gemäß einer ersten Variante mit einer Vorrichtung zum elektrischen Anschluss eines mehrphasigen Schiffsverteilungsnetzes an ein mehrphasiges Landversorgungsnetz mit einer Anschlusseinheit zum Anschluss an das Landversorgungsnetz, welche über einen Eingangstransformator mit einer Kurzkupplung verbunden ist, die über wenigstens einen Gleichspannungskreis miteinander verbundene Stromrichter aufweist, wobei der Kurzkupplung ein Ausgangstransformator nachgeschaltet ist, dessen Ausgangsspannung im Bereich zwischen 5 und 50 KV liegt und der über eine einzige mehrphasige Verbindungsleitung mit dem Schiffsverteilungsnetz verbindbar ist, wobei die Verbindungsleitung wenigstens einen Lichtwellenleiter aufweist, der mit der Kurzkupplung verbunden ist.

Die Erfindung löst diese Aufgabe gemäß einer zweiten Variante mit einem Verfahren zum elektrischen Anschluss eines Schiffsverteilungsnetzes an ein Landversorgungsnetz, bei dem eine mehrphasige Schiffsverbindungsleitung mit einer mehrphasigen Verbindungsleitung über Verbindungsmittel verbunden wird, wobei die Verbindungsleitung über einen Ausgangstransformator mit einer Kurzkupplung verbunden ist, die über einen Eingangstransformator an das Landversorgungsnetz angeschlossen ist, und bei dem eine Steuereinheit anschließend die Verbindungsmittel auf die Funktionstüchtigkeit der Verbindung überprüft und bei Vorliegen der Funktionstüchtigkeit auf eine Regeleinheit der Kurzkupplung zugreift, um die Energieversorgung des Schiffsverteilungsnetzes durch das Landversorgungsnetz in Gang zu setzen, wobei die Steuereinheit auf einem das Schiffverteilungsnetz tragenden Schiff angeordnet ist und über wenigstens einen Lichtwellenleiter der Schiffsverbindungsleitung, der über die Verbindungsmittel mit einem zugeordneten an der Kurzkupplung angeschlossenen Lichtwellenleiter der Verbindungsleitung gekoppelt ist, auf die Regeleinheit zugreift.

Die erfindungsgemäße Vorrichtung stellt eine Mittelspannungsverbindung zwischen dem Energieversorgungsnetz eines Schiffes und einem Versorgungsnetz an Land her. Bei Strömen, die denjenigen einer Kabelverbindung gemäß dem Stand der Technik vergleichbar sind, wird daher erfindungsgemäß eine höhere elektrische Leistung über die Verbindungsleitung übertragen. Auf diese Weise sind lediglich eine Verbindungsleitung und ein Verbindungsmittel zum Anschluss des Schiffes erforderlich. Zur flexiblen Anbindung aller Arten von Schiffsverteilungsnetzen dient die Kurzkupplung, die aus zwei räumlich nahe zueinander oder mit anderen Worten aus zwei Rücken an Rücken angeordneten Stromrichtern besteht, die über Gleichstromkabel miteinander verbunden sind. Die Kurzkupplung ist ebenfalls für die Mittelspannung ausgelegt und weist eine Regeleinheit auf, mit deren Hilfe die Steuerung der jeweiligen Stromumrichtung ermöglicht ist. Insbesondere ist es mit Hilfe der Regelungseinheit möglich, nahezu beliebige Frequenzen am wechselspannungsseitigen Ausgang des Umrichters zu erzeugen. Der Ausgangstransformator übernimmt das Umspannen des Ausgangs der Kurzkupplung auf das gewünschte Mittelspannungspotenzial. Dies liegt grundsätzlich zwischen 5 und 50 KV und insbesondere zwischen 6 und 12 KV.

Durch eine bekannte Kopplung jedes Lichtwellenleiters der Verbindungsleitung mit einem Lichtwellenleiter, der zu einer Steuerungseinheit führt, die beispielsweise auf dem Schiff angeordnet ist, ist eine Kommunikationsleitung zwischen Kurzkupplung und Steuereinheit geschaffen, die mit einer einzigen Steckverbindung herstellbar ist. Gemäß einer vorteilhaften Weiterentwicklung ist die Verbindungsleitung ein Kabel, wobei das Kabel über eine Kabeltrommel mit Zugkraftregelung geführt ist. Das Kabel stellt eine flexible Verbindungsleitung dar. Durch die Kabeltrommel mit Zugkraftregelung wird beispielsweise der Tiedenhub des Schiffes ausgeglichen, so dass unerwünschte mechanische Spannungen in der Verbindungsleitung zwischen Schiff und Land erfindungsgemäß vermieden sind. Kabeltrommeln mit Zugkraftregelung sind dem Fachmann bekannt, so dass an dieser Stelle darauf nicht eingegangen zu werden braucht.

Bei einem bevorzugten Ausführungsbeispiel sind sechs Lichtwellenleiter in der Verbindungsleitung vorgesehen, die über eine zweckmäßige Steckverbindung mit sechs Lichtwellenleitern einer Schiffsverbindungsleitung oder einer Schiffstrosse auf bekannte Weise koppelbar sind.

Gemäß einer bevorzugten Weiterentwicklung der Erfindung weist die Verbindungsleitung ein erstes Steckteil auf, das formkomplementär zu einem zweiten Steckteil ausgebildet ist, welches über eine mehrphasige Schiffsverbindungsleitung mit dem Schiffsverteilungsnetz verbunden ist. Die auf diese Weise ausgebildete Steckverbindung ermöglicht ein schnelles Anschließen des Schiffsverteilungsnetzes an das Landversorgungsnetz. Insbesondere wenn Verbindungsleitung und Schiffsverbindungsleitung jeweils zuordenbare Lichtwellenleiter aufweisen, kommt es neben dem elektrischen Anschluss durch die Steckverbindung auch zu der Ausbildung von Kommunikationsleitungen zum Einstellen der Regelung der Kurzkupplung.

Vorteilhafterweise weist die Schiffsverbindungsleitung Sicherungen zum Schutz des Schiffsverteilungsnetzes vor Kurzschlussströmen auf. Die Sicherungen sind abweichend hiervon auch zum Schutz vor Überspannung geeignet.

Zweckmäßigerweise ist zwischen dem Eingangstransformator und dem Landversorgungsnetz eine Schaltanlage angeordnet. Die Schaltanlage weist zweckmäßigerweise ein handelsübliches Schutzgerät sowie einen Leistungsschalter auf, der zum Schalten von Kurzschlussströmen im Mittelspannungsbereich zwischen 1 KV und 72 KV eingerichtet ist.

Zweckmäßigerweise weisen die Stromrichter eine Brückenschaltung von selbstgeführten Leistungshalbleiterventilen auf. Solche Brückenschaltungen von Stromrichtern sind dem Fachmann bestens bekannt, so dass an dieser Stelle hierauf nicht eingegangen zu werden braucht. Selbstgeführte Stromrichter sind beispielsweise über eine Pulsweitenmodulation im Kilohertzbereich schaltbar. Bei den Leistungshalbleiterventilen handelt es sich beispielsweise um so genannte IGBTs oder GTOs, die dem Fachmann ebenfalls bekannt sind.

Zweckmäßigerweise weist die Verbindungsleitung zwei Leiterphasen zum Potenzialausgleich zwischen Schiffsverteilungsnetz und Landversorgungsnetz auf.

Gemäß einer vorteilhaften Weiterentwicklung des Verfahrens ist die Steuereinheit auf einem das Schiffsverteilungsnetz tragenden Schiff angeordnet und greift über wenigsten einen Lichtwellenleiter der Schiffsverbindungsleitung, der über die Verbindungsmittel mit einem zugeordneten an der Kurzkupplung angeschlossenen Lichtwellenleiter der verbindungsleitung gekoppelt ist, auf die Regeleinheit zu. Gemäß dieser vorteilhaften Weiterentwicklung ist es möglich, die Kurzkupplung vom Schiff aus auf dessen Bedürfnisse einzustellen. Ein aufwändiges Übermitteln von Regeldaten unterbleibt erfindungsgemäß. Der Zugriff der Steuereinheit erfolgt dabei über die einzige Steckverbindung, so dass Datenaustauschleitungen und Energieversorgung kurzzeitig herstellbar sind.

Gemäß einer diesbezüglichen Weiterentwicklung übergibt die Steuereinheit der Regeleinheit Stellparameter zum Einstellen der Kurzkupplung. Die Stellparameter erlauben eine Regelung der Umrichter der Kurzkupplung, so dass diese die passende Frequenz oder andere elektrische Größen bereitstellt, die zur versorgung des Schiffsverteilungsnetzes zweckmäßig sind.

Weitere zweckmäßige Ausgestaltungen und vorteile Erfindung sind Gegenstand der nachfolgenden Beschreibung von Ausführungsbeispielen der Erfindung unter Bezug auf die Figuren der Zeichnung, wobei gleichwirkende Bauteile mit gleichen Bezugszeichen versehen sind und wobei
- Figur 1: eine schematische Darstellung eines Ausführungsbeispiels der erfindungsgemäßen Vorrichtung und
- Figur 2: ein Beispiel einer Kurzkupplung zur Verwendung in der Vorrichtung gemäß Figur 1 zeigen.

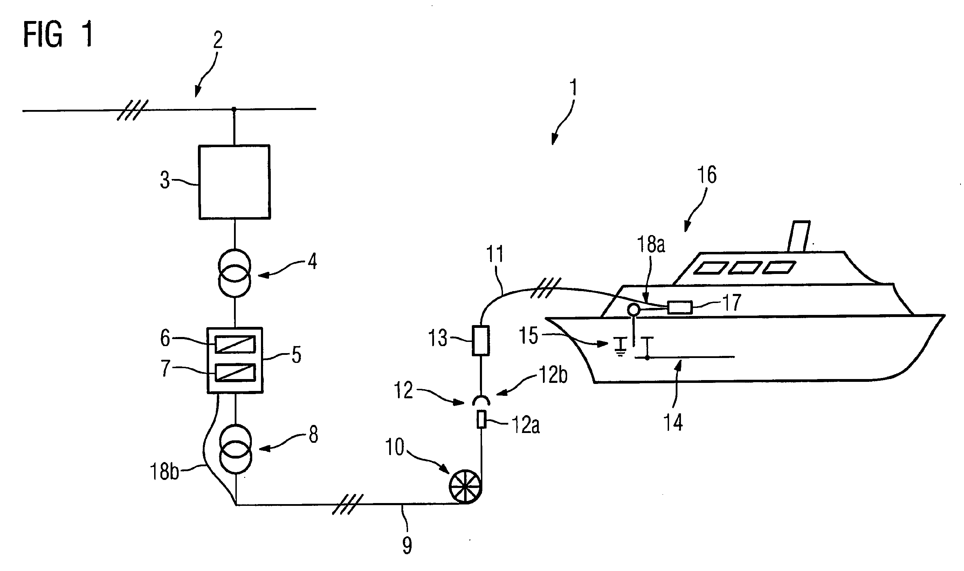

Figur 1 zeigt ein Ausführungsbeispiel der erfindungsgemäßen Vorrichtung 1 in einer schematischen Darstellung. In dem gezeigten Ausführungsbeispiel ist ein Landversorgungsnetz 2 über figürlich nicht dargestellte handelsübliche Anschlussmittel mit der Vorrichtung 1 verbunden. Bei dem Landversorgungsnetz 2 handelt es sich um ein dreiphasiges Wechselspannungsnetz, das über eine Mittelspannungsschaltanlage 3 mit einem Eingangstransformator 4 verbunden ist. Das Landversorgungsnetz 2 weist hier eine Nennspannung von 36 KV auf. Der Transformator 4 besteht aus einer dreiphasigen Primärspule sowie aus einer dreiphasigen Sekundärspule, die mit einer Kurzkupplung 5 verbunden ist. Die Kurzkupplung 5 weist zwei in Figur 1 nur schematisch dargestellte Umrichter 6 und 7 auf, die über figürlich nicht gezeigte Gleichspannungsleitungen miteinander verbunden sind. Der Ausgang der Kurzkupplung 5 ist mit einem Ausgangstransformator 8 verbunden, an dessen Ausgang eine Spannung in der Höhe von 6,6 KV erzeugt ist. Die Phasen der Sekundärspule des Transformators 8 sind in einer Dreiecksschaltung miteinander verbunden. Die drei stromführenden Phasen der Sekundärspule des Transformators 8 werden in einer kabelartig und damit flexibel ausgestalteten Verbindungsleitung 9 über eine Kabeltrommel 10 mit Zugkraftregelung geführt, die zum Ausgleich des Tiedenhubs des Schiffes vorgesehen ist. Zur Verbindung der Verbindungsleitung 9 mit einer Schiffsverbindungsleitung oder Schiffstrosse 11 dienen Verbindungsmittel 12, die aus einem ersten Steckerteil 12a und einem zweiten Steckerteil 12b bestehen, die formkomplementär zueinander ausgebildet sind. So ist das erste Steckteil beispielsweise ein Stecker 12a, der in eine Steckbuchse 12b als zweites Steckteil einsteckbar ist, so dass ein lösbarer Klemmsitz bereitgestellt ist, wobei Übliche Rastmittel bereitgestellt sein können.

Die Schiffsverbindungsleitung 11 ist mit Sicherungen 13 versehen, die eine Beschädigung eines Schiffsverteilungsnetzes 14 im Kurzschlussfall verhindern. Bei dem Schiffsverteilungsnetz 14 handelt es sich ebenfalls um ein dreiphasiges Wechselspannungsnetz, das neben den Sicherungen 13 noch eine nur schematisch angedeutete Schalteinheit 15 umfasst. Das Schiffsverteilungsnetz 14 und die Schaltanlage 15 sind auf einem schematisch angedeuteten Schiff 16 angeordnet, das in einem Hafen anliegt. Das Schiff 16 weist ferner eine Steuereinheit 17 auf, die über sechs Lichtwellenleiter 18a und 18b mit der Kurzkupplung verbunden ist. Die sechs Lichtwellenleiter 18a und 18b sind zusammen mit den drei elektrischen leitenden Phasenleitern und zwei Potenzialausgleichsleitern zu der Schiffsverbindungsleitung 11 gebündelt. Hierzu weist der Schiffsyerbindungsleiter 11 beispielsweise eine zweckmäßige Außenisolierung aus Kunststoff, Kautschuk oder dergleichen auf. Die Schiffsverbindungsleitung ist daher als ein Kabel ausgebildet. Entsprechendes gilt für die Dreiphasenleiter und zwei Potenzialausgleichsleiter sowie für die sechs Lichtwellenleiter 18b der Verbindungsleitung 9. Sowohl die Kopplung der Lichtwellenleiter 18a und 18b als auch die elektrische Verbindung der Phasenleiter erfolgt über eine einzige Steckverbindung 12a und 12b beziehungsweise über die Verbindungsmittel 12.

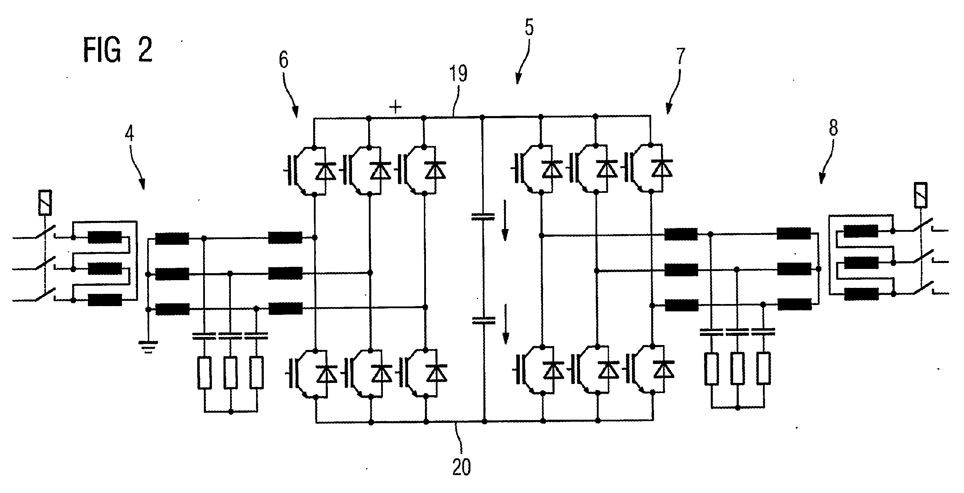

Figur 2 zeigt die Kurzkupplung 5, den Eingangstransformator 4 sowie den Ausgangstransformator 8 in einer vergrößerten Darstellung. Die Phasen der Sekundärwicklung der Transformatoren 4 beziehungsweise 8 sind jeweils mit einer Phase des dreiphasigen Stromrichters verbunden, der mit sechs "Insulated Gate Bipolar Transistors" oder kurz IGBTs mit gegenparallelen Dioden zu einer Sechspulsbrücke verschaltet ist. Die aus IGBTs bestehenden Stromrichter werden auch als Pulsstromrichter bezeichnet, deren selbstgeführte Halbleiterventile sowohl einals auch ausgeschaltet werden können. Die Steuerung erfolgt üblicherweise eine Pulsweitenmodulation mit Taktfrequenzen in der Höhe von einigen Kilohertz. Zwischen den Umrichtern 6 und 7 sind Gleichspannungsleitungen 19 und 20 vorgesehen, wobei die Umrichter im Falle von Kurzkupplungen in unmittelbarer räumlicher Nähe zueinander in einer so genannten Back-to-back Konfiguration angeordnet sind.

## Patentansprüche

1. Vorrichtung (1) zum elektrischen Anschluss eines mehrphasigen Schiffsverteilungsnetzes (14) an ein mehrphasiges Landversorgungsnetz (2) mit einer Anschlusseinheit zum Anschluss des Landversorgungsnetzes (2), welche über einen Eingangstransformator (4) mit einer Kurzkupplung (5) verbunden ist, die über wenigstens einen Gleichspannungskreis (19,20) miteinander verbundene Stromrichter (6,7) aufweist, wobei der Kurzkupplung (5) ein Ausgangstransformator (8) nachgeschaltet ist, dessen Ausgangsspannung im Bereich zwischen 5 und 50 KV liegt und der über eine einzige mehrphasige Verbindungsleitung (9) mit dem Schiffsverteilungsnetz (14) verbindbar ist, wobei die Verbindungsleitung (9) wenigstens einen Lichtwellenleiter (18b) aufweist, der mit der Kurzkupplung (5) verbunden ist.

2. Vorrichtung (1) nach Anspruch 1,
**dadurch gekennzeichnet, dass**
die Verbindungsleitung ein Kabel (9) ist, wobei das Kabel (9) über eine Kabeltrommel (10) mit Zugkraftregelung geführt ist.

3. Vorrichtung (1) gemäß der vorhergehenden Ansprüche,
**dadurch gekennzeichnet, dass**
die Verbindungsleitung (9) ein erstes Steckteil (12a) aufweist, das formkomplementär zu einem zweiten Steckteil (12b) ausgebildet ist, welches über eine mehrphasige Schiffsverbindungsleitung (11) mit dem Schiffsverteilungsnetz (14) verbunden ist.

4. Vorrichtung (1) gemäß Anspruch 3,
**dadurch gekennzeichnet, dass**
die Schiffsverbindungsleitung (11) Sicherungen (13) zum Schutz des Schiffsverteilungsnetzes (14) vor Kurzschlussströmen aufweist.

5. Vorrichtung (1) nach einem der vorhergehenden Ansprüche,
**dadurch gekennzeichnet, dass**
zwischen dem Eingangstransformator (4) und dem Landversorgungsnetz (2) eine Schaltanlage (3) angeordnet ist.

6. Vorrichtung (1) nach einem der vorhergehenden Ansprüche,
**dadurch gekennzeichnet, dass**
die Stromrichter (6,7) eine Brückenschaltung von selbstgeführten Leistungshalbleiterventilen aufweisen.

7. Vorrichtung (1) nach einem der vorhergehenden Ansprüche,
**dadurch gekennzeichnet, dass**
die Verbindungsleitung (9) zwei Leiterphasen zum Potenzialausgleich zwischen Schiffsverteilungsnetz (14) und Landversorgungsnetz (2) aufweist.

8. Verfahren zum elektrischen Anschluss eines mehrphasigen Schiffsverteilungsnetzes (14) an ein Landversorgungsnetz (2), bei dem eine mehrphasige Schiffsverbindungsleitung (11) mit einer mehrphasigen Verbindungsleitung (9) über Verbindungsmittel (12) verbunden wird, wobei die Verbindungsleitung (9) über einen Ausgangstransformatorv (8) mit einer Kurzkupplung (5) verbunden ist, die über einen Eingangstransformator (4) an das Landversorgungsnetz (2) angeschlossen ist, und bei dem eine Steuereinheit (17) anschließend die Verbindungsmittel (12) auf die Funktionstüchtigkeit der Verbindung überprüft und bei Vorliegen der Funktionstüchtigkeit auf eine Regeleinheit der Kurzkupplung (5) zugreift, um die Energieversorgung des Schiffsverteilungsnetzes (14) durch das Landversorgungsnetz (2) in Gang zu setzen, wobei die Steuereinheit (17) auf einem das Schiffverteilungsnetz (14) tragenden Schiff angeordnet ist und über wenigstens einen Lichtwellenleiter (18b) der Schiffsverbindungsleitung (11), der über die Verbindungsmittel (12) mit einem zugeordneten an der Kurzkupplung (5) angeschlossenen Lichtwellenleiter (18a) der Verbindungsleitung (9) gekoppelt ist, auf die Regeleinheit zugreift.

9. Verfahren nach Anspruch 8,
**dadurch gekennzeichnet, dass**
die Steuereinheit (17) der Regeleinheit Stellparameter zum Einstellen der Kurzkupplung (5) übergibt.

## Claims

1. Apparatus (1) for electrical connection of a polyphase marine-vessel distribution system (14) to a polyphase land power supply system (2) using a connecting unit for connecting the land power supply system (2), which connecting unit is connected via an input transformer (4) to a back-to-back link (5), which has converters (6, 7) which are connected to one another via at least one DC circuit (19, 20), with the back-to-back link (5) being followed by an output transformer (8) whose output voltage is in the range between 5 and 50 kV and which can be connected via a single polyphase connection line (9) to the marine-vessel distribution system (14), with the connection line (9) having at least one optical waveguide (18b), which is connected to the back-to-back link (5).

2. Apparatus (1) according to Claim 1, **characterized in that** the connection line is a cable (9), with the cable (9) being passed via a cable drum (10) with tension control.

3. Apparatus (1) according to one of the preceding claims, **characterized in that** the connection line (9) has a first plug part (12a), whose shape is designed to be complementary to a second plug part (12b) which is connected to the marine-vessel distribution system (14) via a polyphase marine-vessel connection line (11).

4. Apparatus (1) according to Claim 3,
**characterized in that** the marine-vessel connection line (11) has fuses (13) for protecting the marine-vessel distribution system (14) against short-circuit currents.

5. Apparatus (1) according to one of the preceding claims, **characterized in that** a switchgear assembly (3) is arranged between the input transformer (4) and the land power supply system (2).

6. Apparatus (1) according to one of the preceding claims, **characterized in that** the converters (6, 7) have a bridge circuit formed by self-commutated power semiconductor valves.

7. Apparatus (1) according to one of the preceding claims, **characterized in that** the connection line (9) has two conductor phases for electrical bonding between the marine-vessel distribution system (14) and the land power supply system (2).

8. Method for electrical connection of a polyphase marine-vessel distribution system (14) to a land power supply system (2), in which a polyphase marine-vessel connection line (11) is connected to a polyphase connection line (9) via connection means (12), with the connection line (9) being connected via an output transformer (8) to a back-to-back link (5) which is connected via an input transformer (4) to the land power supply system (2), and in which a control unit (17) then checks the connection means (12) for the serviceability of the connection and, if it is serviceable, accesses a regulation unit for the back-to-back link (5) in order to provide the power supply for the marine-vessel distribution system (14) by the land power supply system (2), wherein the control unit (17) is arranged on a marine vessel in which the marine-vessel distribution system (14) is located, and accesses the regulation unit via at least one optical waveguide (18b) of the marine-vessel connection line (11), which is coupled via the connection means (12) to an associated optical waveguide (18a), which is connected to the back-to-back link (5), of the connection line (9).

9. Method according to Claim 8, **characterized in that** the control unit (17) transfers control parameters for setting the back-to-back link (5) to the regulation unit.

## Revendications

1. Dispositif ( 1 ) de raccordement électrique d'un réseau ( 14 ) polyphasé de distribution d'un bateau à un réseau ( 2 ) d'alimentation polyphasé à terre, comprenant une unité de raccordement pour le raccordement du réseau ( 2 ) d'alimentation à terre, unité qui est reliée par un transformateur ( 4 ) d'entrée à un couplage ( 5 ) court, lequel a des convertisseurs ( 6, 7 ) reliés entre eux par au moins un circuit ( 19, 20 ) en tension continue, un transformateur ( 8 ), dont la tension de sortie est comprise entre 5 et 50 KV et qui peut être relié au réseau ( 14 ) de distribution du bateau par une ligne ( 9 ) polyphasée unique de liaison, étant monté en aval du couplage ( 5 ) court, la ligne ( 9 ) de liaison ayant au moins un guide ( 18b ) d'ondes lumineuses, qui est relié au couplage ( 5 ) court.

2. Dispositif ( 1 ) suivant la revendication 1,
**caractérisé en ce que** la ligne de liaison est un câble ( 9 ), le câble ( 9 ) étant guidé avec réglage de la force de traction par un tambour ( 10 ) de câble.

3. Dispositif ( 1 ) suivant les revendications précédentes,
**caractérisé en ce que** la ligne ( 9 ) liaison a une première partie ( 12a ) d'enfichage de forme complémentaire d'une deuxième partie ( 12b ) d'enfichage, laquelle est reliée au réseau ( 14 ) de distribution du bateau par une ligne ( 11 ) de liaison polyphasée du bateau.

4. Dispositif ( 1 ) suivant la 3,
**caractérisé en ce que** la ligne ( 11 ) de liaison du bateau a des fusibles ( 13 ) pour protéger le réseau ( 14 ) de distribution du bateau de courants de court-circuit.

5. Dispositif ( 1 ) suivant l'une des revendications précédentes, **caractérisé en ce qu'**une installation ( 3 ) de distribution est montée entre le transformateur ( 4 ) d'entrée et le réseau ( 2 ) d'alimentation à terre.

6. Dispositif ( 1 ) suivant l'une des revendications précédentes, **caractérisé en ce que** les convertisseurs ( 6, 7 ) ont un circuit en pont de soupapes à semi-conducteur de puissance à autocommutation.

7. Dispositif ( 1 ) suivant l'une des revendications précédentes, **caractérisé en ce que** la ligne ( 9 ) de liaison a deux phases de conducteur pour la compensation de potentiel entre le réseau ( 14 ) de distribution du bateau et le réseau ( 2 ) d'alimentation à terre.

8. Procédé de raccordement électrique d'un réseau ( 14 ) polyphasé de distribution de bateau à un réseau ( 2 ) d'alimentation à terre, dans lequel on relie une ligne ( 11 ) polyphasée de liaison du bateau à une ligne ( 9 ) de liaison par un moyen ( 12 ) de liaison, la ligne ( 9 ) polyphasée de liaison étant reliée un couplage ( 5 ) court par un transformateur ( 8 ) de sortie, couplage qui est raccordé par un transformateur ( 4 ) d'entrée au réseau ( 2 ) d'alimentation à terre, et dans lequel une unité ( 17 ) de commande contrôle ensuite le moyen ( 12 ) de liaison sur l'aptitude à fonctionner de la liaison et, si l'aptitude à fonctionner existe, accède à une unité de régulation du couplage ( 5 ) court, pour mettre en fonctionnement l'alimentation en énergie du réseau ( 14 ) de distribution du bateau par le réseau ( 2 ) d'alimentation à terre, l'unité ( 17 ) de commande étant montée sur un bateau portant le réseau ( 14 ) de distribution du bateau et accédant à l'unité de réglage par au moins un guide ( 18b ) d'ondes lumineuses de la ligne ( 11 ) de liaison du bateau, guide qui est couplé par le moyen ( 12 ) de liaison à un guide ( 18a ) d'ondes lumineuses de la ligne ( 9 ) de liaison associée et reliée au couplage ( 5 ) court.

9. Procédé suivant la revendication 8,
**caractérisé en ce que** l'unité ( 17 ) de commande transmet à l'unité de réglage des paramètres de réglage du couplage ( 5 ) court.
